# FASCICULE DE BREVET EUROPEEN

(11) **EP 3 314 342 B1**
(45) Date de publication et mention de la délivrance du brevet: **31.07.2019**
(21) Numéro de dépôt: 16741101.6
(22) Date de dépôt: 24.06.2016
(51) Int. Cl.: F16K 31/163, F15B 15/06

(54) **SYSTEME DE TEST DE COURSE PARTIELLE D'UN ORGANE D'OBTURATION D'UNE VANNE**
SYSTEM ZUR PRÜFUNG DER PARTIELLEN BEWEGUNG EINES VERSCHLUSSTEILS EINES VENTILS
SYSTEM FOR TESTING THE PARTIAL TRAVEL OF A CLOSURE MEMBER OF A VALVE

(30) Priorité: 26.06.2015 FR 1555929
(43) Date de publication de la demande: 02.05.2018
(73) Titulaire: Sarasin Actor, 59320 Sequedin (FR)
(72) Inventeur: LEGRAS, Michel, 59320 Sequedin (FR); BLICQ, Serge, 59320 Sequedin (FR); DEGROOTE, Julien, 59320 Sequedin (FR); NOWICKI, Edmond, 59320 Sequedin (FR)
(74) Mandataire: Cabinet Plasseraud
(86) Numéro de dépôt international: PCT/FR2016/051558
(87) Numéro de publication internationale: WO 2016/207568

(56) Documents cités:
- WO-A1-2008/138949
- US-A1- 2006 185 418

## Description

L'invention concerne un système de test de course partielle d'un organe d'obturation d'une vanne destinée pour interrompre ou autoriser la circulation d'un fluide. Le domaine de l'invention est de celui des vannes dont l'ouverture et/ou la fermeture est commandée au moyen d'un actionneur tel qu'un vérin hydraulique ou pneumatique, permettant ainsi la commande, à distance, de la vanne à l'ouverture et/ou à la fermeture. Ces vannes sont couramment utilisées dans différents processus industriels pour ouvrir ou couper un circuit de fluide qui peut être gazeux, liquide ou un mélange de phases gazeuse et liquide.

Le système de commande de ce type de valve comprend typiquement une électrovalve pour un vérin simple effet, voire bien encore, selon une autre alternative, deux électrovalves dans le cas d'un vérin double effet. Le changement d'état de la vanne est obtenu par commande électrique, provoquant le changement d'état de la ou les électrovalves, qui elle(s) même(s) commande(nt) le vérin à la fermeture ou à l'ouverture de la vanne.

L'électrovalve ouvre ou coupe le fluide sous pression (liquide ou gaz) alimentant la chambre du vérin hydraulique ou pneumatique (simple effet). Dans le cas d'un vérin double effet, l'une des électrovalves permet la commande du vérin dans un premier sens, l'autre électrovalve permettant la commande du vérin dans le sens inverse.

Il est encore connu d'équiper le système de commande de ce type de vanne de fins de course électrique, avec bien souvent deux fins de course permettant de connaître respectivement la position de fermeture totale et la position d'ouverture totale de l'organe d'obturation, voire occasionnellement, d'une ou plusieurs positions de fins de course partielles, intermédiaire(s).

Ce type de vannes est couramment utilisé dans l'industrie, par exemple comme vanne de sécurité, à savoir bien souvent à l'état normalement ouvert, l'actionneur assurant la fermeture de la vanne en cas d'urgence, ou encore à l'état normalement fermé, l'actionneur assurant l'ouverture de la vanne en cas d'urgence.

Afin de contrôler le bon fonctionnement de cette vanne qui est souvent destinée à être maintenue dans une seule position (normalement ouverte ou normalement fermée), il est d'usage de procéder à un test de course partielle (en anglais « *partial stroke test* », abrégé « *PST* »), ce test étant mis en oeuvre périodiquement. Par exemple et dans le cas d'une vanne de sécurité, à l'état normalement ouvert, fermée uniquement en cas d'urgence, le test consiste à vérifier que la vanne peut être partiellement fermée. Pendant ce test, il est important que la vanne reste toujours ouverte, au moins partiellement, ce qui autorise une mise en oeuvre en ligne, c'est-à-dire sans interrompre la circulation du fluide, et ainsi le processus en cours.

L'état de la technique connaît déjà des systèmes pour la mise en oeuvre de test de fermeture partielle, et par exemple ceux des documents EP 2.749.970 A1, EP 2.749.971 A1. Telle qu'illustrée à la figure 1 du document EP 2.749.970.A1, une vanne de sécurité pneumatique est commandée par une électrovalve, repérée 6. Lorsqu'actionnée en cas d'urgence, l'électrovalve 6 permet de libérer l'air au travers d'un tuyau d'évacuation repéré 7, ce qui provoque la fermeture de la vanne repérée 1. Ce document décrit encore un élément « *positioner* », repéré 2, qui permet la mise en oeuvre d'une procédure de test PST. Cet élément « *positioner* », repéré 2 ne contrôle pas l'électrovalve repéré 6 du système de commande, mais est placé sur le trajet de l'air entre la source d'air sous pressions et cette électrovalve, en amont afin d'intervenir directement sur le fluide sous pression du vérin pneumatique de la vanne de sécurité.

D'après les constatations des inventeurs, le test de course partielle mis en oeuvre par ce système permet de détecter un défaut de fermeture lié à un dysfonctionnement de la vanne repérée 1, mais en aucun cas un défaut de fermeture lié à un dysfonctionnement de l'électrovalve, repéré 6, qui peut être une autre origine de non fermeture de la vanne.

On connaît encore du document EP 1.500.857 A1, et telle qu'illustrée à la figure 2 une vanne pneumatique 10 qui comprend une vanne repérée 10a et un actionneur pneumatique simple effet repéré 10b. La vanne 10a est maintenue ouverte sous l'action de l'air sous pression sur le piston du vérin 10b. Un ressort 10c permet la fermeture de la vanne 10a dans le cas d'une chute de pression dans le vérin pneumatique 10a. Une électrovalve repérée 18 comprend un solénoïde et une valve. Le solénoïde permet de contrôler la valve en réponse à un signal électrique sur la ligne de commande repérée 16.

La figure 3 de ce document EP 1.500.857 divulgue encore un système de test de course partielle qui comprend un module repéré 15 qui envoie à l'électrovalve 15 un signal de fermeture du fluide sous pression de la ligne de fluide repérée 11. La différence de pression, d'amont en aval de la valve, provoque la fermeture progressive de la vanne repérée 10. Un dispositif de fin de course à contacts électriques repéré 17 indique au module repéré 15 que la vanne 10 est partiellement fermée, par exemple de 10%.

Ce document divulgue ainsi un module de test apte à mettre en oeuvre une procédure de test de course partielle, dont le signal de sortie commande l'électrovalve de commande 18, et présente pour entrées les fins de course électriques de la vanne.

D'après les constatations des inventeurs, ce document reste toutefois muet quant aux conflits pouvant exister lorsqu'une commande d'urgence de fermeture interfère avec une procédure de test de course partielle, ou encore aux problèmes de sécurité pouvant apparaître lors d'une commande de fermeture d'urgence, et alors que le module repéré 15 est défaillant.

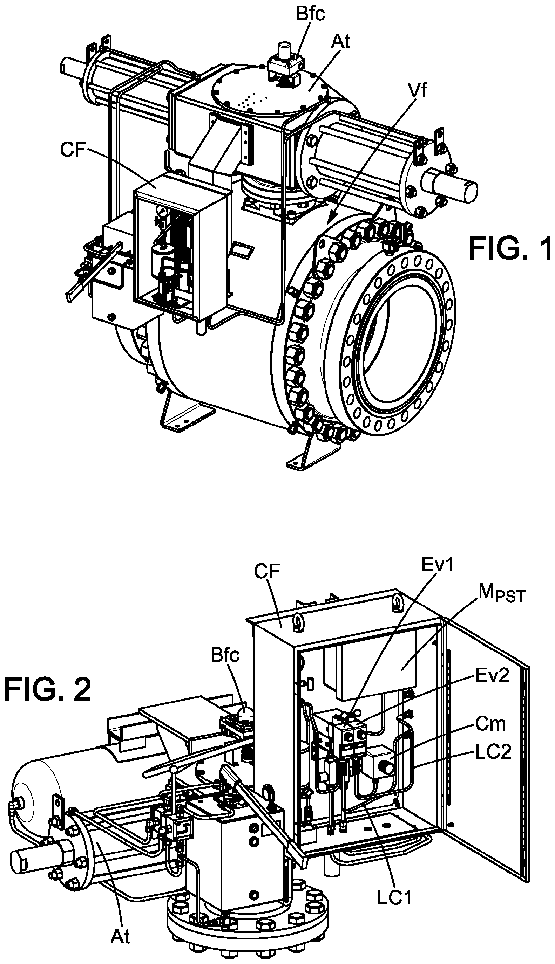

On connait toutefois du document WO 2008/138949 un système qui répond partiellement à cette problématique. Ce système, illustrée à la figure 1 de cette antériorité comprend une vanne repérée 4, apte à fermer ou ouvrir une conduite repérée 5, sous l'action d'un actionneur pneumatique simple effet repéré 2. En position normale, une électrovalve repérée 7 met en communication l'actionneur pneumatique 8 avec un élément de réglage de pression (« *position controler* ») lorsque soumis à une tension Vs provenant d'un dispositif de contrôle repéré 12 via une ligne repérée 13.

Dans le cas d'une situation d'urgence, le dispositif de contrôle 12 éteint la tension Vs, ce qui résulte en la désactivation de l'électrovalve et la dépressurisation de l'actionneur pneumatique 8, un ressort contraignant l'actionneur dans une position de sécurité.

La désactivation de l'électrovalve repérée 7 peut être également commandée par l'ouverture d'un interrupteur commandé, repéré 15, agencé sur la ligne 13, et permettant la mise en oeuvre d'un test de course partielle. A cet effet, le dispositif de contrôle 12 émet un signal de test MVT commandant à l'ouverture l'interrupteur 15. Ce signal de test MVT est fourni via un interrupteur de fin de course, repéré 18, qui est normalement fermé et passe à l'état ouvert lorsque le déplacement de l'organe repéré 3 atteint un déplacement partiel déterminé. En réponse au signal de test MVT, l'interrupteur 15 éteint la tension Vs, ce qui provoque le déplacement de l'organe 3 jusqu'à la position intermédiaire déterminée ciblée par l'interrupteur de fin de course 18 et pour laquelle l'interrupteur 18 s'ouvre, interrompant le signal de test MVT en route vers l'interrupteur 15. En réponse, cet interrupteur 15 se ferme et alimente de nouveau l'électrovalve avec la tension d'alimentation Vs, rétablissant la connexion pneumatique entre la source variable repérée 8 et l'actionneur pneumatique. Ce rétablissement provoque une nouvelle fermeture de l'interrupteur de fin de course 18, et ainsi une nouvelle ouverture de l'interrupteur commandé 15, causant à son tour une nouvelle désactivation de l'électrovalve 7. Cette opération se répète tant que le dispositif de contrôle émet le signal de test MVT, provoquant ainsi une oscillation de l'organe repéré 3 autour de la position déterminée.

Il est ainsi connu du système de cette antériorité, un dispositif de contrôle repéré 12, qui, d'une part, émet suivant une ligne repérée 13 une tension de commande de l'électrovalve 13, provoquant la pressurisation de l'actionneur pneumatique, et d'autre part émet un signal de test MVT en direction d'un interrupteur commandé 15, via un interrupteur de fin de course repéré 18.

Selon les constatations de l'inventeur, un tel système résout les problèmes de conflits pouvant exister lorsqu'une commande d'urgence interfère avec une procédure de test de course partielle. Lorsque le dispositif de contrôle éteint la tension VS sur la ligne repérée 13, l'actionneur est dépressurisé ce qui provoque la mise en sécurité de la vanne, même dans le cas d'émission simultanée d'un signal de test MVT.

Selon la description cette antériorité, l'avantage de cette méthode réside en ce que la procédure de test est mise en oeuvre indépendamment du temps de cycle de traitement du dispositif de contrôle qui est un automate industriel : l'arrêt de l'organe 3 sur la position déterminée de course partielle est en effet instantané dès l'ouverture de l'interrupteur de fin de course 18 qui commande directement l'interrupteur commandé, et ne dépend donc pas du temps de cycle d'un automatisme industriel.

Selon les constatations de l'inventeur, un tel système selon cette antériorité présente toutefois les inconvénients suivants :
- la solution divulguée par cette antériorité nécessite sur la ligne du signal de test un câblage bien particulier avec la présence d'un interrupteur de fin de course 18 commandant directement l'interrupteur commandé repéré 15 de l'électrovalve,
- cette solution se limite au système de test de course partielle d'un organe d'obturation d'une vanne pour lequel l'actionneur est un vérin pneumatique simple effet, commandé par un seule électrovalve : autrement dit cette antériorité ne propose aucune solution duplicable lorsque le vérin est un vérin double effet, et surtout,
- cette solution oblige à placer en série le dispositif de contrôle 12, avec le dispositif de commande distant émettant le signal d'urgence : dans le cas d'une défaillance de l'automatisme du dispositif de contrôle repéré 12, la tension Vs est coupée, provoquant la mise en sécurité de la vanne, et bien souvent l'interruption du processus industriel, avec la nécessité d'intervenir en urgence.

Le but de la présente invention est de pallier les inconvénients précités en proposant un système de test de course partielle permettant de détecter un défaut de fonctionnement de l'ensemble vanne/actionneur/ électrovalve(s) de commande de l'actionneur, de sécurité accrue par rapport aux systèmes de test connus de l'état de la technique.

Un autre but de la présente invention, est de proposer un tel système de test de course partielle qui peut être mis en oeuvre sur un équipement neuf, ou encore aisément par l'ajout d'un dispositif de contrôle tel qu'il sera décrit ci-après sur une vanne commandée par actionneur, telle que connue de l'état de la technique.

D'autres buts et avantages apparaîtront au cours de la description qui va suivre qui n'est donnée qu'à titre indicatif et qui n'a pas pour but de la limiter.

Aussi l'invention concerne un système de test de course partielle d'un organe d'obturation d'une vanne, comprenant :
- ladite vanne présentant ledit organe d'obturation apte à passer d'une position de fermeture vers une position d'ouverture, ou inversement,
- un actionneur, pneumatique ou hydraulique, pour la commande à l'ouverture et/ou à la fermeture de l'organe d'obturation,
- au moins une électrovalve de commande de l'actionneur,
- un dispositif de fins de course à contacts électriques, émettant des signaux représentatifs de positions discrètes de fin de course de l'organe d'obturation,
- un dispositif de contrôle, comprenant une mémoire dans laquelle sont enregistrées des instructions pour la mise en oeuvre d'un test de fin de course partielle, configuré pour émettre en sortie, un signal de commande de ladite au moins une électrovalve et recevant pour entrées lesdits signaux du dispositif de fin de course.

Selon l'invention, le système comprend un dispositif électrique de commande de ladite au moins une électrovalve, apte à commander la vanne à la fermeture totale ou à l'ouverture totale lorsqu'un signal électrique est émis sur au moins une ligne de commande du dispositif électrique de commande,
et en ce que le dispositif de contrôle est relié électriquement à ladite au moins une électrovalve, en parallèle par rapport à la ligne de commande du dispositif de commande, de manière à permettre la commande de la vanne à la fermeture totale ou à l'ouverture totale par le dispositif électrique de commande, indépendamment du dispositif de contrôle,
et en ce que le dispositif de contrôle présente pour entrée(s) le ou lesdits signaux émis sur la ou les lignes de commande du dispositif électrique de commande, ledit dispositif de contrôle étant configuré pour que la commande de fermeture selon une première alternative, ou d'ouverture selon une deuxième alternative du dispositif électrique de commande soit prioritaire sur la mise en oeuvre d'un test de course partielle par ledit dispositif de contrôle, le test de course partielle étant un test de fermeture partielle, selon la première alternative, ou un test d'ouverture partielle selon la seconde alternative.

Selon un mode de réalisation, ledit actionneur est un vérin double effet, le système présentant une première électrovalve pour la commande du vérin dans un premier sens de fermeture de l'organe d'obturation lorsqu'une première chambre du vérin est mise en communication par ladite première électrovalve avec une source de fluide sous pression, et une deuxième électrovalve pour la commande du vérin dans un second sens d'ouverture de l'organe d'obturation lorsqu'une deuxième chambre du vérin est mise en communication par ladite deuxième électrovalve avec une source de fluide sous pression. Le dispositif électrique de commande comprend alors une première ligne de commande associée à la première électrovalve, et une deuxième ligne de commande associée à la seconde électrovalve, ledit dispositif de contrôle présentant pour entrées le signal émis sur la première ligne de commande et le signal émis sur la deuxième ligne de commande.

Alternativement, et selon un autre mode de réalisation, ledit actionneur est un vérin simple effet, le système présentant une électrovalve pour la commande du vérin dans un sens, lorsque la chambre du vérin est mise en communication par l'électrovalve avec un fluide sous pression : ledit dispositif électrique de commande comprend une ligne de commande associée à l'électrovalve, ledit dispositif de contrôle présentant pour entrées le signal émis sur la ligne de commande.

Selon un mode de réalisation, les instructions du dispositif de contrôle permettent la mise en oeuvre d'un test de course partielle, à savoir le test de fermeture partielle selon la première alternative à partir d'une position d'ouverture totale de l'organe d'obturation, ou le test d'ouverture partielle selon la seconde alternative à partir d'une position de fermeture totale de l'organe d'obturation, avec la mise en oeuvre des étapes suivantes du test :
- vérifier que l'organe d'obturation est en position d'ouverture totale par détection d'un contact d'ouverture, selon la première alternative, ou en position de fermeture totale, selon la seconde alternative par détection d'un contact de fermeture,
- commander ladite au moins une électrovalve pour provoquer la fermeture progressive de la vanne selon la première alternative, ou l'ouverture progressive de la vanne selon la seconde alternative et, dès la détection en entrée du dispositif de contrôle d'un signal d'une position de fin de course partielle déterminée,
- commander ladite au moins une électrovalve pour provoquer l'ouverture totale de la vanne selon la première alternative, ou la fermeture totale de la vanne selon la seconde alternative.

Selon des caractéristiques optionnelles de l'invention prises seules ou en combinaison :
- ledit système présente un coffret regroupant ladite au moins une électrovalve, le cas échéant la première électrovalve et la seconde électrovalve, ainsi que ledit dispositif de contrôle ;
- le dispositif de contrôle présente pour entrée(s) un signal d'initiation de test de course partielle ;
- le dispositif de contrôle présente une commande manuelle locale, tel qu'un bouton poussoir, interne audit coffret et dans lequel le signal d'initiation est émis après commande de ladite commande locale ;
- le système présente une commande à distance pour l'émission dudit signal d'initiation de test de course partielle ;
- le dispositif de contrôle présente une horloge interne, et est configuré pour initier la mise en oeuvre de test de course partielle, en des instants programmés ;
- ledit dispositif de fins de course à contacts électriques comprend un premier contact électrique de fin de course partielle et un deuxième contact électrique de fin de course partielle, de sécurité ;
- l'organe d'obturation peut être, selon un mode de réalisation, un organe pivotant ou coulissant pour passer de ladite position d'ouverture totale vers la position de fermeture totale, ou inversement, et dans lequel le dispositif de fin de course à contacts électriques comprend un élément solidaire en rotation (ou en translation) de l'organe d'obturation, ainsi que des contacts électriques, en des positions correspondant respectivement en des positions de fins de course totales et partielle(s).

L'invention sera mieux comprise à la lecture de la description suivante accompagnée des figures en annexe parmi lesquelles :
- La figure 1 est une vue en perspective d'un système de test de course partielle selon un mode de réalisation de l'invention,
- La figure 2 est une vue du système de la figure 1, et plus particulièrement illustrant les éléments regroupés dans le coffret électrique, tels que les électrovalves de commande, dispositif de contrôle pour la mise en oeuvre du test de course partielle, bouton poussoir d'initiation de test...
- La figure 3 est un schéma fonctionnel du système de test des figures 1 et 2 dont l'actionneur est un vérin double effet,
- La figure 4 illustre les différentes entrées et sorties logiques du dispositif de contrôle du système de test de la figure 3,
- La figure 5a est un logigramme illustrant, à titre indicatif, un test de fermeture partielle mis en oeuvre par le système de test selon un mode de réalisation de l'invention illustré à la figure 3,
- Les figures 5b et 5c sont deux logigrammes illustrant la gestion prioritaire des commandes provenant du dispositif de commande électrique sur la mise en oeuvre du test de course partielle,
- La figure 6 est un schéma fonctionnel d'un système selon un second mode de réalisation dont l'actionneur de vanne est un vérin simple effet,
- La figure 7a est un logigramme illustrant, à titre indicatif, un test de fermeture partielle mis en oeuvre par le système de test selon un mode de réalisation de l'invention illustré à la figure 6,
- La figure 7b est un logigramme illustrant la gestion prioritaire de la commande de fermeture d'urgence provenant du dispositif de commande électrique sur la mise en oeuvre du test de course partielle.

Aussi l'invention concerne un système de test de course partielle d'un organe d'obturation d'une vanne Vf, comprenant :
- ladite vanne Vf présentant ledit organe d'obturation apte à passer d'une position de fermeture vers une position d'ouverture, ou inversement,
- un actionneur At, pneumatique ou hydraulique, pour la commande à l'ouverture et/ou à la fermeture de l'organe d'obturation,
- au moins une électrovalve Ev1, Ev2 de commande de l'actionneur At,
- un dispositif de fins de course Bfc à contacts électriques, émettant des signaux représentatifs de positions discrètes de fins de course de l'organe d'obturation,
- un dispositif de contrôle M_{PST}, comprenant une mémoire dans laquelle sont enregistrées des instructions pour la mise en oeuvre d'un test de fin de course partielle, configuré pour émettre en sortie, un signal de commande O1, O2 de ladite au moins une électrovalve Ev1, EV2 et recevant pour entrées Ifc lesdits signaux du dispositif de fin de course Bfc.

Une telle structure de système test est connue en soi du document EP 1.500.857 dans le cas où le vérin est un simple effet. L'invention est née de la constatation par les inventeurs que, et dans un tel système enseigné par ce document, un défaut de sécurité peut apparaître lorsque le dispositif de contrôle, qui comporte implicitement une électronique programmable, devient défaillant, ou encore lorsqu'une procédure de test de course partielle, par exemple de test de fermeture partielle, interfère avec une commande d'urgence de fermeture de la vanne.

L'invention vise à répondre à ce problème de sécurité en permettant :
- la commande de la vanne, en particulier lors d'une commande d'urgence à la fermeture (ou à l'ouverture), même dans le cas d'un dysfonctionnement du dispositif de contrôle,
- la commande d'urgence de la vanne à la fermeture (ou à l'ouverture), même lorsqu'une procédure de test de course partielle est initiée simultanément.

La vanne Vf comprend ledit organe d'obturation qui peut être une vanne de sécurité à l'état normalement ouvert, ou alternativement à l'état normalement fermé.

Dans le cas d'une vanne de sécurité à l'état normalement ouvert, le test de course partielle est un test de fermeture partielle. Alternativement, dans le cas d'une vanne de sécurité à l'état normalement fermé, le test de course partielle est un test d'ouverture partielle.

L'invention comprend un dispositif électrique de commande Cvf de ladite au moins une électrovalve, apte à commander la vanne à la fermeture totale ou à l'ouverture totale lorsqu'un signal électrique est émis sur au moins une ligne de commande LC1, LC2 ; LC1' du dispositif électrique de commande.

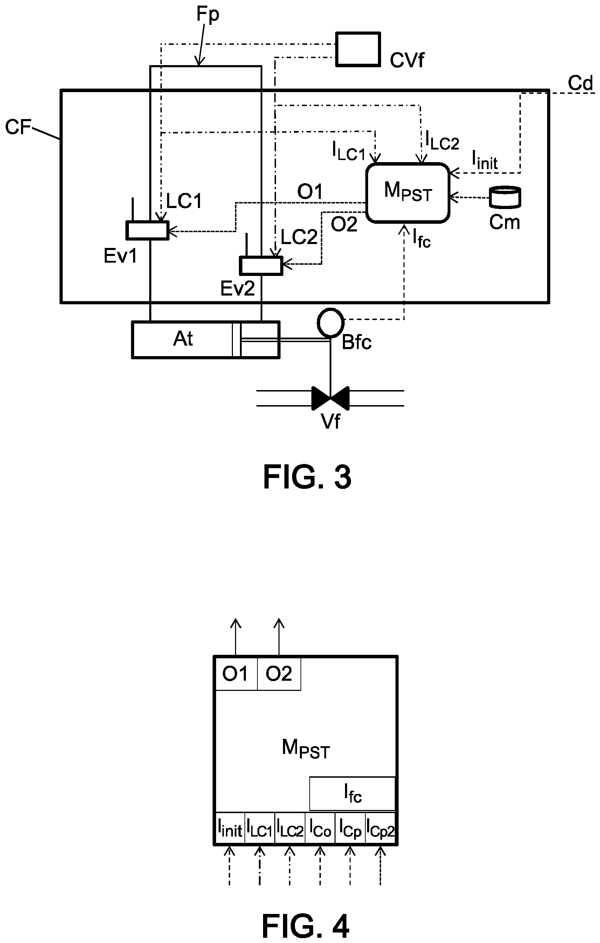

Selon un mode de réalisation illustré non limitativement à la figure 3, l'actionneur At peut être un vérin hydraulique (ou pneumatique) double effet. Dans ce cas, le système comprend deux électrovalves de commande Ev1, Ev2 de l'actionneur. La première électrovalve Ev1, lorsque sollicitée à l'ouverture suite à un signal électrique sur la ligne de commande LC1 (i.e. LC1=1) ouvre le circuit de fluide sous pression Fp alimentant la chambre du vérin provoquant la fermeture progressive de la vanne Vf. Dans ce cas, l'autre électrovalve, la deuxième électrovalve Ev2 est dans une position permettant au fluide contenu dans l'autre chambre du vérin, de l'autre côté du piston de s'échapper. Le signal sur la ligne de commande LC2 de la deuxième électrovalve est alors LC2=0.

La deuxième électrovalve Ev2, lorsque sollicitée à l'ouverture suite à un signal électrique sur la ligne de commande LC2 (i.e. LC2=1) ouvre le circuit de fluide sous pression Fp alimentant la chambre du vérin provoquant l'ouverture progressive de la vanne Vf. Dans ce cas, l'autre électrovalve, la première électrovalve Ev1 est dans une position permettant au fluide contenu dans l'autre chambre du vérin, de l'autre côté du piston, de s'échapper. Le signal sur la ligne de commande LC1 de la première électrovalve est LC1=0.

La première électrovalve Ev1 et la deuxième électrovalve Ev2 sont ainsi commandées, notamment à distance, par le dispositif de commande électrique Cvf émettant des signaux électriques de commande sur les lignes de commande LC1 et LC2 du dispositif et de manière à ouvrir ou fermer la vanne (totalement).

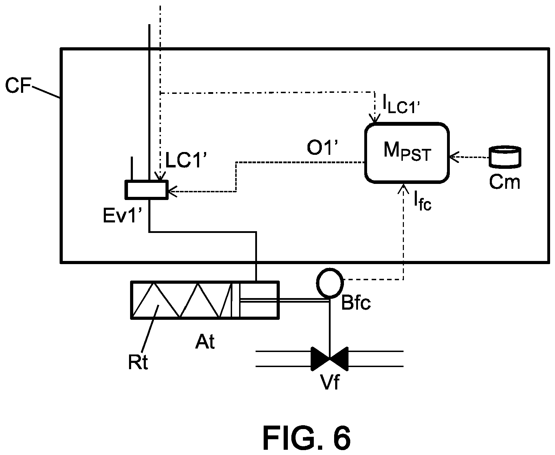

Selon un autre mode de réalisation, illustré à titre d'exemple non limitatif à la figure 6, l'actionneur peut être un vérin simple effet. Le vérin simple effet est utilisé, de préférence, lorsque la chambre est sollicitée par le fluide sous pression, pour ouvrir la vanne Vf lorsque la vanne est une vanne de sécurité à l'état normalement ouvert, ou encore pour fermer la vanne Vf lorsque la vanne est une vanne de sécurité à l'état normalement fermée. Dans ce cas, une électrovalve Ev1', lorsque sollicitée à l'ouverture suite à un signal électrique sur la ligne de commande LC1' (i.e. LC1'=0) ouvre le circuit de fluide sous pression lorsque la vanne est à l'état normalement ouvert. Dans le cas d'une vanne à l'état normalement fermé, l'électrovalve Ev1' provoque la fermeture de la valve.

L'actionnement de l'organe obturateur lors d'une commande d'urgence, c'est-à-dire lorsque LC1'= 1, est assuré par un ressort Rt dont la fonction est de contraindre l'organe d'obturation, à la fermeture d'urgence de la vanne (pour une vanne de sécurité à l'état normalement ouvert), ou encore à l'ouverture d'urgence de la vanne Vf (pour une vanne de sécurité à l'état normalement fermé). Dans ce cas, l'électrovalve ouvre le circuit de fluide et autorise l'échappement du fluide contenu dans la chambre du vérin de l'actionneur At lorsque le signal sur la ligne de commande LC1' est LC1'=0.

L'électrovalve Ev1' est ainsi commandée, notamment à distance, par le dispositif de commande électrique Cvf émettant des signaux électriques de commande sur la ligne de commande LC1' et de manière à ouvrir ou fermer la vanne (totalement).

Le système peut encore comprendre un coffret Cf regroupant ladite au moins une électrovalve, le cas échéant la première électrovalve Ev1 et la seconde électrovalve Ev2, ainsi que ledit dispositif de contrôle M_{PST}.

Le dispositif de fins de course Bfc à contacts électriques, émets des signaux représentatifs de positions discrètes de fins de course de l'organe d'obturation : l'organe d'obturation est bien souvent un organe pivotant pour passer ladite position d'ouverture totale vers la position de fermeture totale, ou inversement. Le dispositif de fin de course à contacts électriques Bfc comprend alors un élément solidaire en rotation de l'organe d'obturation, ainsi que des contacts électriques, en des positions angulaires correspondant respectivement en des positions de fins de course totales et partielle(s). La ou les positions de fins de course intermédiaire(s) peuvent être éventuellement réglable(s). Selon un autre mode de réalisation, l'organe d'obturation peut être un organe coulissant depuis la position d'ouverture totale vers la position de fermeture totale, ou inversement. Le dispositif de fin de course à contacts électriques Bfc comprend alors un élément solidaire en translation de l'organe d'obturation, ainsi que des contacts électriques, en des positions correspondant respectivement en des positions de fins de course totales et partielle(s). La ou les positions de fins de course intermédiaire(s) peuvent être éventuellement réglable(s).

Les positions des fins de course peuvent être choisies parmi la position de fermeture totale, la position d'ouverture totale, et au moins une position intermédiaire Cp2. Le dispositif de fins de course Bfc comprend un contact électrique d'ouverture Co (totale) et/ou un contact électrique de fermeture. Ledit dispositif de fins de course Bfc à contacts électriques comprend encore un (premier) contact électrique de fin de course partielle Cp et de préférence un deuxième contact électrique de fin de course partielle Cp2, de sécurité dont l'intérêt sera décrit par la suite.

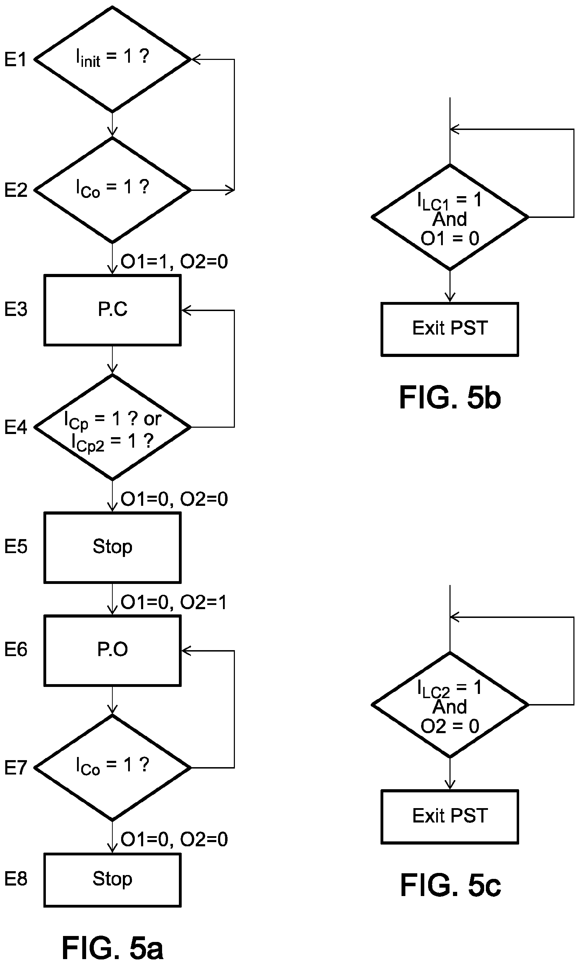

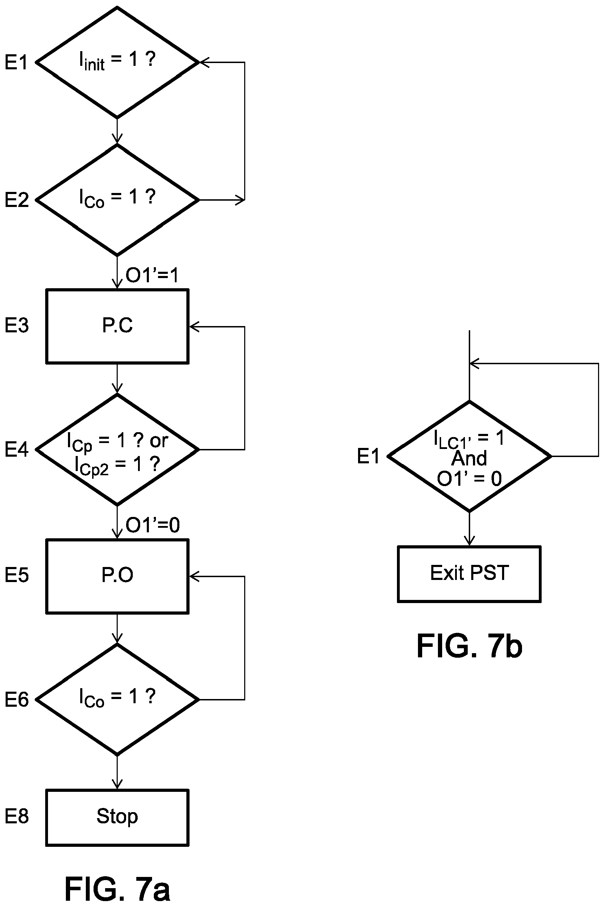

Le dispositif de contrôle M_{PST}, comprend une mémoire dans laquelle sont enregistrées des instructions pour la mise en oeuvre d'un test de fin de course partielle. Ce dispositif est configuré pour émettre en sortie, un signal de commande O1, O2 ; O1' de ladite au moins une électrovalve Ev1, Ev2 ; Ev1' et reçoit pour entrées Ifc lesdits signaux du dispositif de fin de course Bfc. Lors de la mise en oeuvre d'un test de fin de course partielle, les instructions sont automatiquement réalisées par le dispositif de contrôle selon une séquence, et comme illustré aux logigrammes des exemples de la figure 5a et 7a, qui assure le changement du signal de commande O1, O2 ; O1' de ladite au moins électrovalve Ev1, Ev2 ; Ev1' en fonction des signaux du dispositif de fin de course Bfc reçus en entrées (Ifc).

Le dispositif de contrôle M_{PST} peut être constitué essentiellement par un automate programmable industriel qui présente la ou les sorties O1, O2 ; O1' de ladite au moins une électrovalve Ev1, Ev2 ; Ev1' et recevant pour entrées lesdits signaux du dispositif de fin de course Bfc.

Les instructions du dispositif de contrôle pour la mise en oeuvre d'un test de course partielle, à savoir le test de fermeture partielle selon la première alternative à partir d'une position d'ouverture totale de l'organe d'obturation, ou alternativement le test d'ouverture partielle selon la seconde alternative à partir d'une position de fermeture totale de l'organe d'obturation, peuvent comprendre des étapes suivantes du test :
- vérifier que l'organe d'obturation est en position d'ouverture totale par détection d'un contact d'ouverture Co, selon la première alternative, ou en position de fermeture totale, selon la seconde alternative par détection d'un contact de fermeture,
- commander ladite au moins une électrovalve Ev1, Ev2 ; Ev1' pour provoquer la fermeture progressive de la vanne Vf selon la première alternative, ou l'ouverture progressive de la vanne selon la seconde alternative et, dès la détection en entrée du dispositif de contrôle d'un signal d'une position de fin de course partielle déterminée Cp, Cp2
- commander ladite au moins une électrovalve Ev1, Ev2 ; Ev1' pour provoquer l'ouverture totale de la vanne Vf selon la première alternative, ou la fermeture totale de la vanne selon la seconde alternative.

La procédure de test peut être initiée sur commande, le dispositif de contrôle M_{PST} présentant pour entrée(s) Iᵢₙᵢₜ un signal d'initiation de test de course partielle. Il peut s'agir d'une commande manuelle Cm, locale, tel qu'un bouton poussoir, notamment interne à un coffret Cf : le signal d'initiation est émis après appui sur commande locale. Il peut encore s'agir d'une commande à distance pour l'émission dudit signal d'initiation de test de course partielle. Dans les deux cas, la procédure de test est déclenchée immédiatement. Selon encore une autre alternative, le système peut comprendre deux commandes, une commande manuelle Cm, locale, tel qu'un bouton poussoir, intérieur au coffret, et une commande à distance Cd, extérieure au coffret. D'une manière générale, la commande à distance Cd peut utiliser les technologies de communication sans fil.

Le dispositif de contrôle peut encore comprendre une horloge interne, et être configuré pour initier la mise en oeuvre de test de course partielle, en des instants programmés. Par exemple, le dispositif de contrôle peut être programmé pour déclencher la procédure de test partielle, périodiquement.

Nous décrivons à titre d'exemple la procédure de test de course partielle du logigramme de la figure 5a qui est un test de fermeture partielle pour une vanne Vf à l'état normalement ouvert , et dont le système de commande comprend le vérin double effet de la figure 3.
Etape E1 : dès détection d'un signal d'initiation positif sur l'entrée Iᵢₙᵢₜ, la séquence passe à l'étape E2,
Etape E2 : le dispositif vérifie que l'entrée I_{co}= 1, à savoir que l'organe d'obturation est en position d'ouverture (totale) : si cette condition est vérifiée la séquence passe à l'étape E3 ; si cette condition est non vérifiée, on retourne à l'étape E1,
Etape E3 : les sorties O1 et O2 sont modifiées de manière à commander les électrovalves Ev1 et Ev2 à la fermeture progressive de la vanne Vf,
Etape E4 : dès la détection d'un signal de course partielle Cp ou Cp2 provenant du dispositif de fins de course Bfc, la séquence passe à l'étape E5, sinon la fermeture continue,
Etape E5 : les sorties O1 et O2 sont modifiées de manière à commander les électrovalves Ev1 et Ev2 de manière à arrêter la fermeture de la vanne, la séquence passant à l'étape E6,
Etape E6 : les sorties O1 et O2 sont modifiées de manière à commander les électrovalves Ev1 et Ev2 de manière à obtenir l'ouverture progressive de la vanne,
Etape E7 : dès la détection d'un signal de course d'ouverture Co provenant du dispositif de fins de course Bfc, la séquence passe à l'étape E8, sinon l'ouverture continue,
Etape E8 : les sorties O1 et O2 sont modifiées de manière à commander les électrovalves Ev1 et Ev2 de manière à arrêter l'ouverture de la vanne, la séquence du test de fermeture partielle étant terminée.

Nous décrivons encore à titre d'exemple la procédure de test de course partielle du logigramme de la figure 7a qui est un test de fermeture partielle pour une vanne Vf à l'état normalement ouvert, et dont le système de commande comprend le vérin double effet de la figure 6.
Etape E1 : dés détection d'un signal d'initiation positif sur l'entrée Iᵢₙᵢₜ, la séquence passe à l'étape E2,
Etape E2 : le dispositif vérifie que l'entrée I_{co}= 1, à savoir que l'organe d'obturation est en position d'ouverture (totale) : si cette condition est vérifiée la séquence passe à l'étape E3 ; si cette condition est non vérifiée, on retourne à l'étape E1,
Etape E3 : la sortie O1' est modifiée de manière à commander l'électrovalve Ev1' à la fermeture progressive de la vanne Vf : la pression dans la chambre du vérin est ainsi libérée de sorte que le ressort Rt ferme progressivement la vanne Vf,
Etape E4 : dès la détection d'un signal de course partielle Cp ou Cp2 provenant du dispositif de fins de course Bfc, la séquence passe à l'étape E5, sinon la fermeture continue
Etape E5 : la sortie O1' est modifiée de manière à commander l'électrovalve Ev1' à la fermeture de la vanne, la pression dans la chambre du vérin augmentant et sollicitant l'organe à la fermeture,
Etape E6 : dès la détection d'un signal de course d'ouverture Co provenant du dispositif de fins de course Bfc, la séquence de la procédure de test est terminée.

Avantageusement, l'invention répond aux problèmes de sécurité ci-dessus exposés en ce que :
- le dispositif de contrôle est relié électriquement à ladite au moins une électrovalve Ev1, Ev2 ; Ev1', en parallèle par rapport à la ligne de commande LC1, LC2 ; LV1' du dispositif de commande, de manière à permettre la commande de la vanne Vf à la fermeture totale ou à l'ouverture totale par le dispositif électrique de commande, indépendamment du dispositif de contrôle : autrement dit et dans le cas d'une défaillance du dispositif de contrôle M_{PST}, le dispositif électrique de commande Cvf permet toujours de commander directement la ou les électrovalves Ev1, Ev2 ; Ev1', et ainsi la vanne Vf à l'ouverture et/ou à la fermeture.
- le dispositif de contrôle M_{PST} présente pour entrée(s) I_{LC1}, I_{LC2} ; I_{LC1'} le ou lesdits signaux émis sur la ou les lignes de commande LC1, LC2 ; LC1' du dispositif électrique de commande Cvf, ledit dispositif de contrôle étant configuré pour que la commande de fermeture totale, selon une première alternative, ou d'ouverture totale selon une deuxième alternative du dispositif électrique de commande soit prioritaire sur la mise en oeuvre d'un test de course partielle par ledit dispositif de contrôle M_{PST}, le test de course partielle étant un test de fermeture partielle, selon la première alternative, ou un test d'ouverture partielle selon la seconde alternative.

Autrement dit, et dans le cas d'une commande d'urgence à la fermeture d'une vanne Vf normalement ouverte, la commande d'urgence à la fermeture est prioritaire sur la mise en oeuvre du test de course partielle. Dans le cas d'une commande d'urgence à l'ouverture d'une vanne Vf normalement fermée, la commande d'urgence à l'ouverture est prioritaire sur la mise en oeuvre de la procédure de test de course partielle.

Le dispositif de contrôle M_{PST} présente ainsi avantageusement pour entrée(s) I_{LC1}, I_{LC2} ; I_{LC1'} des copies des signaux de commande des électrovalves Ev1, Ev2, Ev_{1'} émises par le dispositif de commande électrique Cvf. Dès la détection d'une commande d'urgence à la fermeture, selon la première alternative, ou la détection d'une commande d'urgence à l'ouverture, selon la seconde alternative, le dispositif de contrôle arrête automatiquement la mise en oeuvre du test de course partielle, pour laisser la priorité à la commande d'urgence.

La gestion de priorité de la commande provenant du dispositif de commande électrique Cvf sur le test de course partielle mis en oeuvre par le dispositif de contrôle est illustrée aux logigrammes 5b et 5c qui opèrent en parallèle de la séquence du logigramme de la figure 5a, dans le cas d'un actionneur à vérin double effet.

Ainsi, tel qu'illustré au logigramme de la figure 5b, le test de course partielle est interrompu lorsque le dispositif de contrôle M_{PST} détecte en entrée une commande à la fermeture (I_{LC1}=1) et alors que la sortie O1=0, qui est alors interprétée comme une commande à la fermeture provenant du dispositif de contrôle électrique Cvf (et non du dispositif de contrôle M_{PST}).

De préférence, tel qu'illustré au logigramme de la figure 5c, le test de course partielle est également interrompu lorsque le dispositif de contrôle M_{PST} détecte en entrée une commande à l'ouverture (I_{LC2}=1) et alors que la sortie O2=0, qui qui est alors interprétée comme une commande d'ouverture provenant du dispositif de contrôle électrique Cvf (et non du dispositif de contrôle M_{PST}).

La gestion de priorité de la commande provenant du dispositif de commande électrique Cvf sur le test de course partielle mis en oeuvre par le dispositif de contrôle M_{PST} est illustrée au logigramme de la figure 7b qui opère en parallèle de la séquence du logigramme de la figure 7a, dans le cas d'un actionneur à vérin simple effet.

Ainsi et tel qu'illustré au logigramme de la figure 7b, le test de course partielle est interrompu lorsque le dispositif de contrôle M_{PST} détecte en entrée une commande à la fermeture (I_{LC1'}=1) et alors que la sortie O1'=0, qui est alors interprétée comme une commande à la fermeture provenant du dispositif de contrôle électrique Cvf (et non du dispositif de contrôle M_{PST}).

Dans tous les cas, une commande d'urgence à la fermeture, dans le cas d'une vanne de sécurité normalement ouverte, ou encore une commande d'urgence à l'ouverture, dans le cas d'une vanne de sécurité normalement fermée, provenant par le dispositif de commande électrique Cvf est traitée prioritairement sur la mise en oeuvre du test de course partielle.

Selon un mode de réalisation, le dispositif de contrôle Mₚₛₜ peut encore enregistrer dans une mémoire l'ensemble des changements opérés en entrées du dispositif de contrôle et en sorties du dispositif de contrôle M_{PST}, y compris la date et les horaires détaillés des changements, et dans un objectif de suivi et de contrôle du fonctionnement de la vanne.

Un autre avantage du système selon l'invention est qu'il peut être obtenu, à partir de système de l'état de la technique, par l'ajout du dispositif de contrôle Mₚₛₜ selon l'invention, et avantageusement sans modifier les lignes électriques de commande des systèmes existants.

Aussi l'invention concerne encore un procédé d'obtention d'un système conforme à l'invention selon l'un quelconque des modes de réalisations précités, avantageusement à partir d'un système existant comprenant :
- ladite vanne Vf présentant ledit organe d'obturation apte à passer d'une position de fermeture vers une position d'ouverture, ou inversement,
- un actionneur At, pneumatique ou hydraulique, pour la commande à l'ouverture et/ou à la fermeture de l'organe d'obturation,
- au moins une électrovalve Ev1, Ev2 ; Ev1' de commande de l'actionneur At,
- un dispositif de fins de course Bfc à contacts électriques, émettant des signaux représentatifs de positions discrètes de fin de course de l'organe d'obturation,
- un dispositif électrique de commande Cvf de ladite au moins une électrovalve, apte à commander la vanne à la fermeture totale ou à l'ouverture totale lorsqu'un signal électrique est émis sur au moins une ligne de commande LC1, LC2 ; LC1' du dispositif électrique de commande.

Avantageusement, on obtient ledit système selon l'invention par l'ajout du dispositif de contrôle Mₚₛₜ relié électriquement à ladite au moins une électrovalve Ev1, Ev2 ; Ev1', en parallèle par rapport à la ligne de commande LC1, LC2 ; LV1' du dispositif de commande, sans modifier les lignes électriques de commande du système existant.

Le câblage nécessite seulement des ajouts, à savoir, d'une part, le ou les câbles reliant les sorties O1, O2 ; O1' dudit dispositif de contrôle M_{PST} à la ou les électrovalves, et le câble permettant de relier la sortie du dispositif de fin de course Bfc à l'entrée Ifc dudit dispositif de contrôle M_{PST}.

D'une manière générale, un même dispositif de contrôle peut, selon un mode de réalisation, piloter plusieurs actionneurs At, respectivement associés à différentes vannes Vf pour assurer leur ouverture ou leur fermeture. Ces différentes vannes peuvent être commandées, indépendamment les unes des autres, par plusieurs dispositifs de commande électriques indépendants. Le dispositif de contrôle M_{PST} présente alors pour entrées les signaux émis sur les lignes de commande respectives des différents dispositifs de commande électrique.

Naturellement d'autres modes de réalisation auraient pu être envisagés sans pour autant sortir du cadre de l'invention tel que défini par les revendications ci-après.

### NOMENCLATURE

At. Actionneur,
Bfc. Dispositif de fins de course à contacts électriques,
Cm. Commande manuelle, locale (initiation du test de course partielle),
Cd. Commande à distance
Cvf. Dispositif de commande électrique
Ev1, Ev2 ; Ev1'. Electrovalves,
Fp. Source de fluide sous pression
LC1, LC2; LC1'. Lignes de commande du dispositif de commande électrique des électrovalves,
Ifc. Entrées du dispositif de contrôle : signaux de fin de courses (avec I_{Co} le contact électrique d'ouverture totale, I_{Cp} le premier contact de fermeture partielle et I_{Cp2} le deuxième contact électrique de fermeture partielle).
I_{LC1}, I_{LC2}; I_{LC1'} Entrées du dispositif de contrôle : signaux des lignes de commande,
Iᵢₙᵢₜ. Entrée du dispositif de contrôle : signal d'initiation de test,
M_{PST}. Dispositif de contrôle pour la mise en oeuvre d'un test de course partielle,
O1, O2 ; O1'. Sorties des signaux commandes des électrovalves (Dispositif de contrôle M_{PST}),
Vf. Vanne,
Rt. Ressort
Cf. Coffret
Co : Position d'ouverture totale
Cp2 : Position intermédiaire
E1 à E8 (Figure 5a) ou E1 à E7 (figure 7a). Etapes du test de fermeture partielle,
P.C. Ordre de fermeture progressive,
P.O. Ordre d'ouverture progressive.
Stop. Ordre d'arrêt.

## Revendications

1. Système de test de course partielle d'un organe d'obturation d'une vanne (Vf), comprenant :
- ladite vanne (Vf) présentant ledit organe d'obturation apte à passer d'une position de fermeture vers une position d'ouverture, ou inversement,
- un actionneur (At), pneumatique ou hydraulique, pour la commande à l'ouverture et/ou à la fermeture de l'organe d'obturation,
- au moins une électrovalve (Ev1, Ev2 ; Ev1') de commande de l'actionneur (At),
- un dispositif de fins de course (Bfc) à contacts électriques, émettant des signaux représentatifs de positions discrètes de fin de course de l'organe d'obturation,
- un dispositif de contrôle (M_{PST}), comprenant une mémoire dans laquelle sont enregistrées des instructions pour la mise en oeuvre d'un test de fin de course partielle, configuré pour émettre en sortie, un signal de commande (O1, O2 ; O1') de ladite au moins une électrovalve (Ev1, Ev2 ; Ev1') et recevant pour entrées (Ifc) lesdits signaux du dispositif de fin de course (Bfc), les instructions étant réalisées automatiquement par le dispositif de contrôle (M_{PST}) selon une séquence assurant le changement du signal de commande (O1, O2 ; O1') de ladite au moins électrovalve (Ev1, Ev2 ; Ev1') en fonction des signaux du dispositif de fin de course (Bfc) reçus en entrées (Ifc),
**caractérisé en ce qu'**il comprend un dispositif électrique de commande (Cvf) de ladite au moins une électrovalve, apte à commander la vanne à la fermeture totale ou à l'ouverture totale lorsqu'un signal électrique est émis sur au moins une ligne de commande (LC1, LC2 ; LC1') du dispositif électrique de commande,
et **en ce que** le dispositif de contrôle est relié électriquement à ladite au moins une électrovalve (Ev1, Ev2 ; Ev1'), en parallèle par rapport à la ligne de commande (LC1, LC2 ; LC1') du dispositif de commande, de manière à permettre la commande de la vanne (Vf) à la fermeture totale ou à l'ouverture totale par le dispositif électrique de commande, indépendamment du dispositif de contrôle, et de manière à permettre, dans le cas d'une défaillance du dispositif de contrôle (M_{PST}), au dispositif électrique de commande (Cvf) de toujours commander directement la ou les électrovalves (Ev1, Ev2 ; Ev1'), et ainsi la vanne (Vf) à l'ouverture et/ou à la fermeture,
et **en ce que** le dispositif de contrôle (M_{PST}) présente pour entrée(s) (I_{LC1}, I_{LC2} ; I_{LC1'}) le ou lesdits signaux émis sur la ou les lignes de commande (LC1, LC2 ; LC1') du dispositif électrique de commande, ledit dispositif de contrôle étant configuré pour que la commande de fermeture selon une première alternative, ou d'ouverture selon une deuxième alternative du dispositif électrique de commande soit prioritaire sur la mise en oeuvre d'un test de course partielle par ledit dispositif de contrôle, le test de course partielle étant un test de fermeture partielle, selon la première alternative, ou un test d'ouverture partielle selon la seconde alternative.

2. Système de test de course partielle selon la revendication 1, dans lequel ledit actionneur (At) est un vérin double effet, le système présentant une première électrovalve (Ev1) pour la commande du vérin dans un premier sens de fermeture de l'organe d'obturation lorsqu'une première chambre du vérin est mise en communication par ladite première électrovalve (Ev1) avec une source de fluide sous pression Fp, et une deuxième électrovalve (Ev2) pour la commande du vérin dans un second sens d'ouverture de l'organe d'obturation lorsqu'une deuxième chambre du vérin est mise en communication par ladite deuxième électrovalve (Ev2) avec une source de fluide sous pression Fp,
et dans lequel ledit dispositif électrique de commande comprend une première ligne de commande (LC1) associée à la première électrovalve, et une deuxième ligne de commande (LC2) associée à la seconde électrovalve, ledit dispositif de contrôle présentant pour entrées (I_{LC1}, I_{LC2}) le signal émis sur la première ligne de commande (LC1) et le signal émis sur la deuxième ligne de commande (LC2).

3. Système de test de course partielle selon la revendication 1, dans lequel ledit actionneur (At) est un vérin simple effet, le système présentant une électrovalve (Ev1') pour la commande du vérin dans un sens, lorsque la chambre du vérin est mise en communication par l'électrovalve (Ev1') avec une fluide sous pression,
et dans lequel ledit dispositif électrique de commande comprend une ligne de commande (LC1') associée à l'électrovalve (Ev1'), ledit dispositif de contrôle présentant pour entrées (I_{LC1'}) le signal émis sur la ligne de commande (LC1').

4. Système de test de course partielle selon l'une des revendications 1 à 3, dans lequel les instructions du dispositif de contrôle permettent la mise en oeuvre d'un test de course partielle, à savoir le test de fermeture partielle selon la première alternative à partir d'une position d'ouverture totale de l'organe d'obturation, ou le test d'ouverture partielle selon la seconde alternative à partir d'une position de fermeture totale de l'organe d'obturation, avec la mise en oeuvre des étapes suivantes du test :
- vérifier que l'organe d'obturation est en position d'ouverture totale par détection d'un contact d'ouverture (Co), selon la première alternative, ou en position de fermeture totale, selon la seconde alternative par détection d'un contact de fermeture,
- commander ladite au moins une électrovalve (Ev1, Ev2) pour provoquer la fermeture progressive de la vanne (Vf) selon la première alternative, ou l'ouverture progressive de la vanne selon la seconde alternative et, dès la détection en entrée du dispositif de contrôle d'un signal d'une position de fin de course partielle déterminée (Cp, Cp2),
- commander ladite au moins une électrovalve (Ev1, Ev2) pour provoquer l'ouverture totale de la vanne (Vf) selon la première alternative, ou la fermeture totale de la vanne selon la seconde alternative.

5. Système selon l'une des revendications 1 à 4, présentant un coffret (Cf) regroupant ladite au moins une électrovalve, le cas échéant la première électrovalve (Ev1) et la seconde électrovalve (Ev2), ainsi que ledit dispositif de contrôle (M_{PST}).

6. Système selon l'une des revendications 1 à 5, dans lequel le dispositif de contrôle (M_{PST}) présente pour entrée(s) (Iᵢₙᵢₜ) un signal d'initiation de test de course partielle.

7. Système selon les revendications 5 et 6, présentant une commande manuelle locale (Cm), tel qu'un bouton poussoir, interne audit coffret et dans lequel le signal d'initiation est émis après commande de ladite commande locale.

8. Système selon les revendications 5 et 6, éventuellement en combinaison avec la revendication 7, présentant une commande à distance pour l'émission dudit signal d'initiation de test de course partielle.

9. Système selon l'une des revendications 1 à 8, dans lequel le dispositif de contrôle présente une horloge interne, et est configuré pour initier la mise en oeuvre de test de course partielle, en des instants programmés.

10. Système de test de course partielle selon l'une des revendications 1 à 9, dans lequel ledit dispositif (Bfc) de fins de course à contacts électriques comprend un premier contact électrique de fin de course partielle (Cp) et un deuxième contact électrique de fin de course partielle (Cp2), de sécurité.

11. Système selon l'une des revendications 1 à 10, dans lequel l'organe obturation est un organe pivotant, ou coulissant pour passer ladite position d'ouverture totale vers la position de fermeture totale, ou inversement, et dans lequel le dispositif de fin de course à contacts électriques (Bfc) comprend un élément solidaire en rotation ou en translation de l'organe d'obturation, ainsi que des contacts électriques, en des positions correspondant respectivement en des positions de fins de course totales et partielle(s).

12. Procédé d'obtention d'un système selon l'une des revendications 1 à 11 à partir d'un système existant comprenant :
- une vanne (Vf) présentant un organe d'obturation apte à passer d'une position de fermeture vers une position d'ouverture, ou inversement,
- un actionneur (At), pneumatique ou hydraulique, pour la commande à l'ouverture et/ou à la fermeture de l'organe d'obturation,
- au moins une électrovalve (Ev1, Ev2 ; Ev1') de commande de l'actionneur (At),
- un dispositif de fins de course (Bfc) à contacts électriques, émettant des signaux représentatifs de positions discrètes de fin de course de l'organe d'obturation,
- un dispositif électrique de commande (Cvf) de ladite au moins une électrovalve, apte à commander la vanne à la fermeture totale ou à l'ouverture totale lorsqu'un signal électrique est émis sur au moins une ligne de commande (LC1, LC2 ; LC1') du dispositif électrique de commande,
procédé dans lequel on obtient ledit système selon l'une des revendications 1 à 11 par l'ajout d'un dispositif de contrôle (Mₚₛₜ) au système existant en reliant électriquement ladite au moins une électrovalve (Ev1, Ev2 ; Ev1'), en parallèle par rapport à la ligne de commande (LC1, LC2 ; LC1') du dispositif de commande, et sans modifier les lignes électriques de commande du système existant, de manière à permettre la commande de la vanne (Vf) à la fermeture totale ou à l'ouverture totale par le dispositif électrique de commande, indépendamment du dispositif de contrôle, et de manière à permettre, dans le cas d'une défaillance du dispositif de contrôle (Mₚₛₜ), au dispositif électrique de commande (Cvf) de toujours commander directement la ou les électrovalves (Ev1, Ev2 ; Ev1'), et ainsi la vanne (Vf) à l'ouverture et/ou à la fermeture, et en ce que le dispositif de contrôle (Mpst) présente pour entrée(s) (I_{LC1}, I_{LC2} ; I_{LC1'}) le ou lesdits signaux émis sur la ou les lignes de commande (LC1, LC2 ; LC1') du dispositif électrique de commande, ledit dispositif de contrôle étant configuré pour que la commande de fermeture selon une première alternative, ou d'ouverture selon une deuxième alternative du dispositif électrique de commande soit prioritaire sur la mise en oeuvre d'un test de course partielle par ledit dispositif de contrôle, le test de course partielle étant un test de fermeture partielle, selon la première alternative, ou un test d'ouverture partielle selon la seconde alternative.

13. Utilisation du système de test de course partielle selon l'une des revendications 1 à 11, pour la mise en oeuvre du test de fermeture partielle selon la première alternative, ou de test d'ouverture partielle selon la seconde alternative sur une vanne.

## Patentansprüche

1. Teilhubtestsystem für ein Verschlussorgan eines Ventils (Vf), umfassend:
- das Ventil (Vf), welches das Verschlussorgan aufweist, das von einer Schließstellung zu einer Öffnungsstellung oder umgekehrt übergehen kann,
- einen pneumatischen oder hydraulischen Aktor (At) für das Ansteuern beim Öffnen und/oder beim Schließen des Verschlussorgans,
- mindestens ein Magnetventil (Ev1, Ev2; Ev1') zum Ansteuern des Aktors (At),
- eine Hubendvorrichtung (Bfc) mit elektrischen Kontakten, die Signale ausgibt, welche für einzelne Hubendstellungen des Verschlussorgans repräsentativ sind,
- eine Steuervorrichtung (M_{PST}), die einen Speicher umfasst, in dem Anweisungen gespeichert sind für die Umsetzung eines Teilhubendtests, die dafür konfiguriert ist, am Ausgang ein Signal zum Ansteuern (O1, O2; O1') des mindestens einen Magnetventils (Ev1, Ev2; Ev1') auszugeben, und die als Eingänge (Ifc) die Signale der Hubendvorrichtung (Bfc) empfängt, wobei die Anweisungen von der Steuervorrichtung (M_{PST}) automatisch nach einer Sequenz ausgeführt werden, die die Änderung des Ansteuersignals (O1, O2; O1') des mindestens einen Magnetventils (Ev1, Ev2; Ev1') abhängig von den an Eingängen (Ifc) empfangenen Signalen der Hubendvorrichtung (Bfc) sicherstellt,
**dadurch gekennzeichnet, dass** es eine elektrische Vorrichtung zum Ansteuern (Cvf) des mindestens einen Magnetventils umfasst, die das Ventil beim vollständigen Schließen oder beim vollständigen Öffnen ansteuern kann, wenn ein elektrisches Signal auf mindestens einer Ansteuerleitung (LC1, LC2; LC1') der elektrischen Ansteuervorrichtung ausgegeben wird,
und dadurch, dass die Steuervorrichtung parallel zur Ansteuerleitung (LC1, LC2; LC1') der Ansteuervorrichtung elektrisch an das mindestens eine Magnetventil (Ev1, Ev2; Ev1') angeschlossen ist, um das Ansteuern des Ventils (Vf) beim vollständigen Schließen oder beim vollständigen Öffnen durch die elektrische Ansteuervorrichtung unabhängig von der Steuervorrichtung zu ermöglichen, und um im Falle eines Ausfalls der Steuervorrichtung (M_{PST}) der elektrischen Ansteuervorrichtung (Cvf) zu ermöglichen, das oder die Magnetventile (Ev1, Ev2; Ev1'), und somit das Ventil (Vf) beim Öffnen und/oder beim Schließen immer noch direkt anzusteuern,
und dadurch, dass die Steuervorrichtung (M_{PST}) als Eingang/Eingänge (I_{LC1}, I_{LC2}; I_{LC1'}) das oder die auf der oder den Ansteuerleitungen (LC1, LC2; LC1') der elektrischen Ansteuervorrichtung ausgegebenen Signale aufweist, wobei die Steuervorrichtung so konfiguriert ist, dass der Befehl zum Schließen, gemäß einer ersten Alternative, oder zum Öffnen, gemäß einer zweiten Alternative, der elektrischen Ansteuervorrichtung gegenüber der Umsetzung eines Teilhubtests durch die Steuervorrichtung vorrangig ist, wobei der Teilhubtest gemäß der ersten Alternative ein Teilschließtest, oder gemäß der zweiten Alternative ein Teilöffnungstest ist.

2. Teilhubtestsystem nach Anspruch 1, wobei der Aktor (At) ein doppeltwirkender Zylinder ist, wobei das System ein erstes Magnetventil (Ev1) aufweist für das Ansteuern des Zylinders in einer ersten Richtung zum Schließen des Verschlussorgans, wenn eine erste Kammer des Zylinders vom ersten Magnetventil (Ev1) mit einer Druckfluidquelle Fp in Kommunikation gebracht wird, und ein zweites Magnetventil (Ev2) für das Ansteuern des Zylinders in einer zweiten Richtung zum Öffnen des Verschlussorgans, wenn eine zweite Kammer des Zylinders vom zweiten Magnetventil (Ev2) mit einer Druckfluidquelle Fp in Kommunikation gebracht wird,
und wobei die elektrische Ansteuervorrichtung eine erste Ansteuerleitung (LC1) umfasst, die mit dem ersten Magnetventil assoziiert ist, und eine zweite Ansteuerleitung (LC2), die mit dem zweiten Magnetventil assoziiert ist, wobei die Steuervorrichtung als Eingänge (I_{LC1}, I_{LC2}) das auf der ersten Ansteuerleitung (LC1) ausgegebene Signal und das auf der zweiten Ansteuerleitung (LC2) ausgegebene Signal aufweist.

3. Teilhubtestsystem nach Anspruch 1, wobei der Aktor (At) ein einfachwirkender Zylinder ist, wobei das System ein Magnetventil (Ev1') aufweist für das Ansteuern des Zylinders in einer Richtung, wenn die Kammer des Zylinders vom Magnetventil (Ev1') mit einem Druckfluid in Kommunikation gebracht wird,
und wobei die elektrische Ansteuervorrichtung eine Ansteuerleitung (LC1') umfasst, die mit dem Magnetventil (Ev1') assoziiert ist, wobei die Steuervorrichtung als Eingänge (I_{LC1'}) das auf der Ansteuerleitung (LC1') ausgegebene Signal aufweist.

4. Teilhubtestsystem nach einem der Ansprüche 1 bis 3, wobei die Anweisungen der Steuervorrichtung die Umsetzung eines Teilhubtests, das heißt den Teilschließtest gemäß der ersten Alternative ausgehend von einer vollständigen Öffnungsstellung des Verschlussorgans, oder den Teilöffnungstest gemäß der zweiten Alternative ausgehend von einer vollständigen Schließstellung des Verschlussorgans ermöglichen, mit der Umsetzung der folgenden Schritte des Tests:
- Verifizieren, dass sich das Verschlussorgan in vollständiger Öffnungsstellung befindet, durch Erkennen eines Öffnungskontakts (Co) gemäß der ersten Alternative, oder in vollständiger Schließstellung, durch Erkennen eines Schließkontakts gemäß der zweiten Alternative,
- Ansteuern des mindestens einen Magnetventils (Ev1, Ev2), um das zunehmende Schließen des Ventils (Vf) gemäß der ersten Alternative, oder das zunehmende Öffnen des Ventils gemäß der zweiten Alternative zu bewirken, und, sobald am Eingang der Steuervorrichtung ein Signal einer bestimmten Teilhubendstellung (Cp, Cp2) erkannt wird,
- Ansteuern des mindestens einen Magnetventils (Ev1, Ev2), um das vollständige Öffnen des Ventils (Vf) gemäß der ersten Alternative, oder das vollständige Schließen des Ventils gemäß der zweiten Alternative zu bewirken.

5. System nach einem der Ansprüche 1 bis 4, das ein Gehäuse (Cf) aufweist, welches das mindestens eine Magnetventil, gegebenenfalls das erste Magnetventil (Ev1) und das zweite Magnetventil (Ev2), sowie die Steuervorrichtung (M_{PST}) zusammenfasst.

6. System nach einem der Ansprüche 1 bis 5, wobei die Steuervorrichtung (M_{PST}) als Eingang/Eingänge (Iᵢₙᵢₜ) ein Teilhubtest-Initiierungssignal aufweist.

7. System nach den Ansprüchen 5 und 6, das eine lokale manuelle Ansteuerung (Cm) wie etwa einen Drucktaster innerhalb des Gehäuses aufweist, und wobei das Initiierungssignal nach Betätigen der lokalen Ansteuerung ausgegeben wird.

8. System nach den Ansprüchen 5 und 6, gegebenenfalls in Kombination mit Anspruch 7, das eine Fernansteuerung für das Ausgeben des Teilhubtest-Initiierungssignals aufweist.

9. System nach einem der Ansprüche 1 bis 8, wobei die Steuervorrichtung einen internen Takt aufweist und dafür konfiguriert ist, die Umsetzung eines Teilhubtests zu programmierten Zeitpunkten zu initiieren.

10. Teilhubtestsystem nach einem der Ansprüche 1 bis 9, wobei die Hubendvorrichtung (Bfc) mit elektrischen Kontakten einen ersten elektrischen Teilhubendkontakt (Cp) und einen zweiten elektrischen Sicherheits-Teilhubendkontakt (Cp2) umfasst.

11. System nach einem der Ansprüche 1 bis 10, wobei das Verschlussorgan ein Schwenk- oder Gleitorgan ist, um von der vollständigen Öffnungsstellung zur vollständigen Schließstellung oder umgekehrt überzugehen, und wobei die Hubendvorrichtung mit elektrischen Kontakten (Bfc) ein Element umfasst, das dreh- oder translationsfest mit dem Verschlussorgan verbunden ist, sowie elektrische Kontakte an Stellen umfasst, die jeweils Voll- und Teilhubendstellung(en) entsprechen.

12. Verfahren zum Erhalten eines Systems nach einem der Ansprüche 1 bis 11 ausgehend von einem existierenden System, umfassend:
- ein Ventil (Vf), das ein Verschlussorgan aufweist, welches von einer Schließstellung zu einer Öffnungsstellung oder umgekehrt übergehen kann,
- einen pneumatischen oder hydraulischen Aktor (At) für das Ansteuern beim Öffnen und/oder beim Schließen des Verschlussorgans,
- mindestens ein Magnetventil (Ev1, Ev2; Ev1') zum Ansteuern des Aktors (At),
- eine Hubendvorrichtung (Bfc) mit elektrischen Kontakten, die Signale ausgibt, welche für einzelne Hubendstellungen des Verschlussorgans repräsentativ sind,
- eine elektrische Vorrichtung zum Ansteuern (Cvf) des mindestens einen Magnetventils, die das Ventil beim vollständigen Schließen oder beim vollständigen Öffnen ansteuern kann, wenn ein elektrisches Signal auf mindestens einer Ansteuerleitung (LC1, LC2; LC1') der elektrischen Ansteuervorrichtung ausgegeben wird,
Verfahren, bei dem das System nach einem der Ansprüche 1 bis 11 durch das Hinzufügen einer Steuervorrichtung (Mₚₛₜ) zum existierenden System durch elektrisches Anschließen des mindestens einen Magnetventils (Ev1, Ev2; Ev1') parallel zur Ansteuerleitung (LC1, LC2; LC1') der Ansteuervorrichtung, und ohne Modifizieren der elektrischen Ansteuerleitungen des existierenden Systems erhalten wird, um das Ansteuern des Ventils (Vf) beim vollständigen Schließen oder beim vollständigen Öffnen durch die elektrische Ansteuervorrichtung unabhängig von der Steuervorrichtung zu ermöglichen, und um im Falle eines Ausfalls der Steuervorrichtung (Mₚₛₜ) der elektrischen Ansteuervorrichtung (Cvf) zu ermöglichen, das oder die Magnetventile (Ev1, Ev2; Ev1'), und somit das Ventil (Vf) beim Öffnen und/oder beim Schließen immer noch direkt anzusteuern, und dadurch, dass die Steuervorrichtung (Mpst) als Eingang/Eingänge (I_{LC1}, I_{LC2}; I_{LC1'},) das oder die auf der oder den Ansteuerleitungen (LC1, LC2; LC1') der elektrischen Ansteuervorrichtung ausgegebenen Signale aufweist, wobei die Steuervorrichtung so konfiguriert ist, dass der Befehl zum Schließen, gemäß einer ersten Alternative, oder zum Öffnen, gemäß einer zweiten Alternative, der elektrischen Ansteuervorrichtung gegenüber der Umsetzung eines Teilhubtests durch die Steuervorrichtung vorrangig ist, wobei der Teilhubtest gemäß der ersten Alternative ein Teilschließtest, oder gemäß der zweiten Alternative ein Teilöffnungstest ist.

13. Verwendung des Teilhubtestsystems nach einem der Ansprüche 1 bis 11 für die Umsetzung des Teilschließtests gemäß der ersten Alternative, oder des Teilöffnungstests gemäß der zweiten Alternative an einem Ventil.

## Claims

1. System for testing the partial travel of a closure member of a valve (Vf), comprising:
- said valve (Vf) having said closure member capable of moving from a closed position to an open position, or vice versa,
- a pneumatic or hydraulic actuator (At), for controlling the closure member when opened and/or closed,
- at least one solenoid valve (Ev1, Ev2; Ev1') for controlling the actuator (At),
- a limit switch device (Bfc) comprising electrical contacts, sending out signals representing discrete end-of-travel positions of the closure member,
- a controller (M_{PST}), including a memory in which instructions for implementing a partial end-of-travel test are recorded, configured to send out as output, a signal for controlling (O1, O2; O1') said at least one solenoid valve (Ev1, Ev2; Ev1') and receiving as input (Ifc) said signals of the end-of-travel device (Bfc), with the instructions being carried out automatically by the controller (M_{PST}) according to a sequence that allows for the change in the signal for controlling (O1, O2; O1') said at least solenoid valve (Ev1, Ev2; Ev1') according to the signals of the end-of-travel device (Bfc) received as input (Ifc),
**characterised in that** it comprises an electrical device for controlling (Cvf) said at least one solenoid valve, able to control the valve when totally closed or totally open when an electrical signal is sent out over at least one control line (LC1, LC2; LC1') of the electrical control device,
and **in that** the controller is electrically connected to said at least one solenoid valve (Ev1, Ev2; Ev1'), in parallel with respect to the control line (LC1, LC2; LC1') of the control device, so as to allow the valve (Vf) to be controlled, when totally closed or totally open, by the electrical control device, independently of the controller, and in such a way as to allow, in the case of a failure of the controller (M_{PST}), the electrical control device (Cvf) to still directly control the solenoid valve or valves (Ev1, Ev2; Ev1'), and thus the valve (Vf) when closed and/or open,
and **in that** the controller (M_{PST}) has for input(s) (I_{LC1}, I_{LC2}; I_{LC1'}) said signal or signals sent out over the control line or lines (LC1, LC2; LC1') of the electrical control device, said controller being configured so that the controlling of the closing according to a first alternative, or the opening according to a second alternative of the electrical control device has priority over the implementing of a partial travel test by said controller, the partial travel test being a partial closing test, according to the first alternative, or a partial opening test according to the second alternative.

2. System for testing the partial travel according to claim 1, wherein said actuator (At) is a double-acting cylinder, the system having a first solenoid valve (Ev1) for controlling the cylinder in a first direction of closure of the closure member when a first chamber of the cylinder is put into communication by said first solenoid valve (Ev1) with a pressurised source of fluid Fp, and a second solenoid valve (Ev2) for controlling the cylinder in a second direction of opening of the closure member when a second chamber of the cylinder is put into communication by said second solenoid valve (Ev2) with a pressurised source of fluid Fp,
and wherein said electrical control device comprises a first control line (LC1) associated with the first solenoid valve, and a second control line (LC2) associated with the second solenoid valve, said controller having for inputs (I_{LC1}, I_{LC2}) the signal sent out over the first control line (LC1) and the signal sent out over the second control line (LC2).

3. System for testing the partial travel according to claim 1, wherein said actuator (At) is a single-acting cylinder, the system having a solenoid valve (Ev1') for controlling the cylinder in one direction, when the chamber of the cylinder is put into communication by the solenoid valve (Ev1') with a pressurised fluid,
and wherein said electrical control device comprises a control line (LC1') associated with the solenoid valve (Ev1'), said controller having for inputs (I_{LC1'}) the signal sent out over the control line (LC1').

4. System for testing the partial travel according to one of claims 1 to 3, wherein the instructions of the controller allow for the implementing of a partial travel test, namely the partial closing test according to the first alternative from a totally open position of the closure member, or the partial opening test according to the second alternative from a totally closed position of the closure member, with the implementing of the following steps of the test:
- checking that the closure member is in the totally open position via detecting an opening contact (Co), according to the first alternative, or in the totally closed position, according to the second alternative via detecting a closing contact,
- controlling said at least one solenoid valve (Ev1, Ev2) in order to cause the progressive closing of the valve (Vf) according to the first alternative, or the progressive opening of the valve according to the second alternative and, as soon as a signal of a determined partial end-of-travel position (Cp, Cp2) is detected at the input of the controller,
- commander said at least one solenoid valve (Ev1, Ev2) in order to cause the total opening of the valve (Vf) according to the first alternative, or the total closing of the valve according to the second alternative.

5. System according to one of claims 1 to 4, having a case (Cf) that groups together said at least one solenoid valve, where applicable the first solenoid valve (Ev1) and the second solenoid valve (Ev2), as well as said controller (M_{PST}).

6. System according to one of claims 1 to 5, wherein the controller (M_{PST}) has for input(s) (Iᵢₙᵢₜ) a partial travel test initiation signal.

7. System according to claims 5 and 6, having a local manual control (Cm), such as a push-button, internal to said case and wherein the initiation signal is sent out after controlling said local control.

8. System according to claims 5 and 6, possibly in combination with claim 7, having a remote control for the sending out of said partial travel test initiation signal.

9. System according to one of claims 1 to 8, wherein the controller has an internal clock, and is configured to initiate the implementing of the partial travel test, at programmed instants.

10. System for testing the partial travel according to one of claims 1 to 9, wherein said end-of-travel device (Bfc) comprising electrical contacts comprises a first partial end-of-travel electrical contact (Cp) and a second safety partial end-of-travel electrical contact (Cp2).

11. System according to one of claims 1 to 10, wherein the closure member is a pivoting, or sliding member for passing said totally open position to the totally closed position, or vice versa, and wherein the end-of-travel device comprising electrical contacts (Bfc) comprises an element integral in rotation or in translation with the closure member, as well as electrical contacts, in conditions that respectively correspond to total and partial end-of-travel positions.

12. Method for obtaining a system according to one of claims 1 to 11 from an existing system comprising:
- a valve (Vf) that has a closure member capable of moving from a closed position to an open position, or vice versa,
- a pneumatic or hydraulic actuator (At), for controlling the closure member when opened and/or closed,
- at least one solenoid valve (Ev1, Ev2; Ev1') for controlling the actuator (At),
- a limit switch device (Bfc) comprising electrical contacts, sending out signals representing discrete end-of-travel positions of the closure member,
- an electrical device for controlling (Cvf) said at least one solenoid valve, capable of controlling the valve when totally closed or totally open when an electrical signal is sent out over at least one control line (LC1, LC2; LC1') of the electrical control device,
method wherein said system is obtained according to one of claims 1 to 11 by the adding of a controller (Mₚₛₜ) to the existing system by electrically connecting said at least one solenoid valve (Ev1, Ev2; Ev1'), in parallel with respect to the control line (LC1, LC2; LC1') of the control device, and without modifying the electrical control lines of the existing system, so as to allow the valve (Vf) to be controlled, when totally closed or totally open, by the electrical control device, independently of the controller, and in such a way as to allow, in the case of a failure of the controller (Mpst), the electrical control device (Cvf) to still directly control the solenoid valve or valves (Ev1, Ev2; Ev1'), and thus the valve (Vf) when closed and/or open, and in that the controller (Mpst) has for input(s) (I_{LC1}, I_{LC2}; I_{LC1'},) the signal or signals sent out over the control line or lines (LC1, LC2; LC1') of the electrical control device, said controller being configured so that the controlling of the closing according to a first alternative, or the opening according to a second alternative of the electrical control device has priority over the implementing of a partial travel test by said controller, the partial travel test being a partial closing test, according to the first alternative, or a partial opening test according to the second alternative.

13. Use of the partial travel test system according to one of claims 1 to 11, for the implementing of the partial closing test according to the first alternative, or of the partial opening test according to the second alternative on a valve.
